# EUROPÄISCHE PATENTSCHRIFT

(11) **EP 1 300 555 B1**
(45) Veröffentlichungstag und Bekanntmachung des Hinweises auf die Patenterteilung: **07.12.2005**
(21) Anmeldenummer: 02400034.1
(22) Anmeldetag: 29.07.2002
(51) Int. Cl.: F01N 3/28, F23R 3/40, B01J 35/04, B01D 53/00

(54) **Katalysator**
Catalyst
Catalyseur

(30) Priorität: 08.08.2001 CH 14682001
(43) Veröffentlichungstag der Anmeldung: 09.04.2003
(73) Patentinhaber: Alstom Technology Ltd, 5400 Baden (CH)
(72) Erfinder: Carroni, Richard, Dr., 5443 Niederrohrdorf (CH); Griffin, Timothy, Dr., 5408 Ennetbaden (CH); Schmidt, Verena, Dr., 5400 Baden (CH); Winkler, Dieter, 79787 Lauchringen (DE)

(56) Entgegenhaltungen:
- WO-A-97/23276
- WO-A-99/55459
- DE-A- 4 018 704
- US-A- 4 870 824
- US-A- 5 328 359
- US-A- 5 346 389
- US-A- 5 518 697
- PATENT ABSTRACTS OF JAPAN vol. 008, no. 255 (C-253), 21. November 1984 (1984-11-21) & JP 59 136140 A (BABCOCK HITACHI KK), 4. August 1984 (1984-08-04)

## Beschreibung

### TECHNISCHES GEBIET

Die vorliegende Erfindung bezieht sich auf das Gebiet der Katalysatortechnik. Sie betrifft einen Katalysator gemäss dem Oberbegriff des Anspruchs 1. Unter Katalysator wird im vorliegenden Fall eine mit einer katalytischen Beschichtung versehene Trägerstruktur verstanden. Die erfindungsgemässe Trägerstruktur ist für viele exothermische katalytische Reaktionen, z. B. katalytische Verbrennung und Synthesegaserzeugung, anwendbar, insbesondere dort, wo eine begleitende homogene Gasphasenreaktion zu vermeiden ist.

Ein solcher Katalysator ist z.B. aus der Druckschrift US-A-5,518,697 bekannt.

### STAND DER TECHNIK

Eine Anzahl von Druckschriften beschreibt katalytische Trägerstrukturen, in denen die Ueberhitzung der katalytischen Beschichtungen dadurch reduziert wird, dass die maximale heterogene Brennstoffumwandlung auf etwa 50% begrenzt wird. Dies wird dadurch erreicht, dass die im Katalysator angeordneten Kanäle alternierend mit einer katalytischen Beschichtung versehen sind, d.h. beschichtete und nicht-beschichtete Kanäle sich abwechseln (siehe z.B. die US-A-4,870,824 oder die US-A-5,346,389 oder die US-A-5,328,359). Bei den in der US-A-5,346,389 oder der US-A-5,328,359 beschriebenen Lösungen wird entweder ein wechselnd beschichtetes gewelltes Trägerblech zick-zack-förmig gefaltet, oder es wird eine Struktur aus zwei übereinanderliegenden Blechen aufgewickelt. Weiterhin wird in der US-A-5,518,697 bzw. der US-A-5,512,250 eine dreilagige Struktur offenbart, bei denen die beschichteten und unbeschichteten Kanäle unterschiedliche Dimensionen aufweisen, um die Kühlung der katalytischen Beschichtungen weiter zu verbessern. Aus WO 99 55 459 A ist ein Katalysator mit in strömungsrichtung parallel verlaufenden kanälen bekannt, die von ebenen Blechen begrenzt werden.

Um eine Deaktivierung der katalytischen Beschichtungen zu verhindern, ist es entscheidend, dass deren Oberflächentemperatur unterhalb eines vorgegebenen Wertes gehalten wird, der von der Art des Katalysatormaterials abhängt. Für PdO z. B. ergibt sich eine Reduktion zu Pd bei Temperaturen oberhalb von etwa 900°C (bei Drücken > 15 bar). In den o.g. Druckschriften wird die Oberflächentemperatur dadurch begrenzt, dass nicht alle Oberflächen mit einer katalytischen Beschichtung versehen sind. Im Fall der US-A-5,328,359 ist die Oberflächentemperatur unter den Betriebsbedingungen einer Gasturbine nach wie vor zu hoch: T_{Oberfl} = Tₑᵢₙ + 1/2ΔT_{ad}, erreicht typischerweise 1000°C, wobei T_{Oberfl} die Oberflächentemperatur, Tₑᵢₙ die Temperatur am Eingang des Katalysators und T_{ad} die adiabatische Verbrennungstemperatur ist. Im Fall der US-A-5,518,697 wird eine zusätzliche konvektive Kühlung dadurch erreicht, dass die Querschnittsflächen der nichtbeschichteten Kanäle relativ zu denen der beschichteten Kanäle vergrössert werden. In beiden Fällen sind jedoch Kanäle vorhanden, welche keinerlei katalytische Beschichtung aufweisen. Unter den Bedingungen, wie sie bei einer Gasturbine herrschen (Mischungen mit λ=2,2 bei Drücken > 15 bar), besteht jedoch die konkrete Gefahr einer homogenen Zündung nahe der Oberflächen, und zwar speziell in den unbeschichteten Kanälen, weil dort keine Reduktion der Brennstoffkonzentration stattfindet. Das Problem wird dadurch verschärft, dass die unbeschichteten Kanäle gleichzeitig diejenigen Kanäle mit den grössten hydraulischen Durchmessern sind.

### DARSTELLUNG DER ERFINDUNG

Es ist daher Aufgabe der Erfindung, einen Katalysator bzw. eine katalytisch beschichtete Trägerstruktur zu schaffen, welche gleichzeitig eine verbesserte Kühlung der katalytischen Oberflächen ermöglicht und die homogene Zündung im Katalysator sicher vermeidet.

Die Aufgabe wird durch die Gesamtheit der Merkmale des Anspruchs 1 gelöst. Der Kern der Erfindung besteht darin, dass die ebenen Bleche derart beschichtet sind, dass in allen Kanälen katalytische Beschichtungen vorhanden sind, dass die katalytischen Beschichtungen auf vorgegebene Abschnitte der Kanäle beschränkt sind, und dass innerhalb der Kanäle den Abschnitten mit den katalytischen Beschichtungen zur Absorption der von den katalytischen Beschichtungen im Betrieb abgegebenen Wärmestrahlung jeweils unbeschichtete Abschnitte gegenüberliegen. Die Kanäle werden durch gewellte Bleche gebildet, die jeweils zwischen den ebenen Blechen angeordnet und mit diesen verbunden sind, wobei die gewellten Bleche entweder unbeschnichtet sind oder nur abschnittsweise Katalytisch beschichtet sind.

Die Lösung macht von der Tatsache Gebrauch, dass die heissen Oberflächen der katalytischen Beschichtungen einen gewissen Anteil an Wärme in Form von Strahlung abgeben. Diese Strahlungsenergie kann durch benachbarte katalytisch nicht aktive Flächen absorbiert und dann durch konvektive Kühlung abgeführt werden. Bei den für den Gasturbinenbetrieb interessierenden Temperaturen kann die durch Strahlung abgegebene Wärme schätzungsweise etwa 30% der konvektiv abgegebenen Wärme betragen. Werden also die katalytisch inaktiven, wärmeabsorbierenden Oberflächen optimiert, kann die Kühlung deutlich verbessert werden. Durch das Wechselspiel von beschichteten und unbeschichteten Bereichen werden bei Ausnutzung der Wärmeabfuhr durch Strahlung gleichzeitig die Verhältnisse in allen Kanälen vergleichmässigt, so dass die Gefahr einer homogenen Zündung beseitigt ist.
Um den Umsatz zu erhöhen wird die Beschichtungsfläche vergrössert, indem gewellten Bleche ebenfalls abschnittsweise wie die ebenen Bleche katalytisch beschichtet sind.

Weitere bevorzugte Ausgestaltungen der erfindungsgemässen Lösung ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer schematisierten Darstellung die Sicht in Strömungsrichtung auf die Einlassseite eines Katalysators gemäss einem ersten bevorzugten Ausführungsbeispiel der Erfindung;
- Fig. 2: die Draufsicht von oben auf verschiedene beschichtete und unbeschichtete Bleche des Katalysators nach Fig. 1;
- Fig. 3: den Längsschnitt durch den Katalysator aus Fig. 1 entlang der Ebene III-III;
- Fig. 4: eine zu Fig. 2 alternative Art der Beschichtung der Bleche eines Katalysators nach der Erfindung;
- Fig. 5: in einer zu Fig. 1 vergleichbaren Darstellung ein Katalysator gemäss einem zweiten bevorzugten Ausführungsbeispiel der Erfindung mit einer Beschichtung gemäss Fig. 4;
- Fig. 6: den Längsschnitt durch den Katalysator aus Fig. 5 entlang der Ebene VI-VI;
- Fig. 7: eine weitere Möglichkeit der Beschichtung im Rahmen der Erfindung;
- Fig. 8: in einer zu Fig. 2 vergleichbaren Darstellung verschiedene beschichtete und unbeschichtete Bleche des Katalysators gemäss einem weiteren bevorzugten Ausführungsbeispiel der Erfindung;
- Fig. 9: den Längsschnitt durch einen Katalysator mit einer Beschichtung gemäss Fig. 8;
- Fig. 10: die zu Fig. 1 und 5 vergleichbare Frontansicht eines Katalysators mit einer Beschichtung gemäss Fig. 7
- Fig. 11: eine weitere Ausführungsvariante der Erfindung, bei welcher die gewellten Bleche zwischen den ebenen Blechen abschnittsweise beschichet sind und
- Fig. 12: einen Längsschnitt durch den Katalysator analog zu Fig. 6 für eine weitere Ausführungsvariante, bei welcher alle ebenen Bleche abschnittsweise beschichtet sind.

### WEGE ZUR AUSFÜHRUNG DER ERFINDUNG

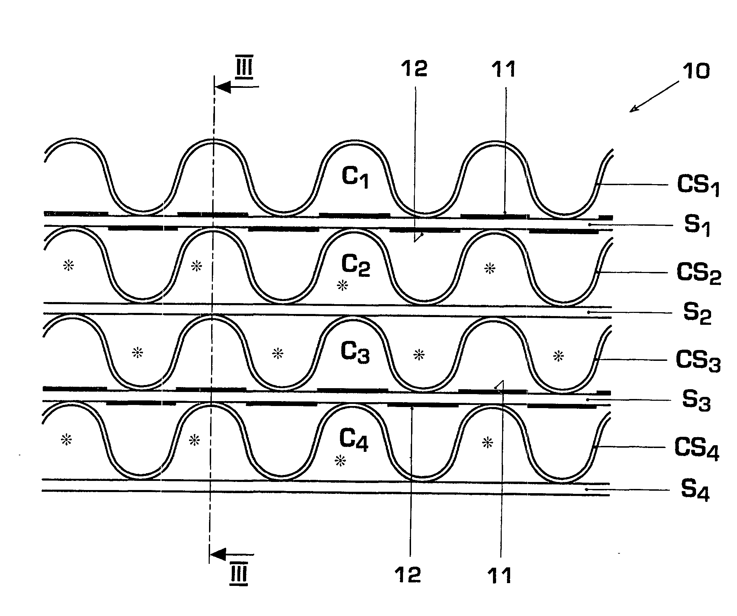

In Fig. 1 ist in einer schematisierten Darstellung die Sicht in Strömungsrichtung auf die Einlassseite eines Katalysators gemäss einem ersten bevorzugten Ausführungsbeispiel der Erfindung wiedergegeben. Der Katalysator 10, der ausschnittweise dargestellt ist, umfasst einen Stapel von ebenen Blechen S1,..,S4 und gewellten Blechen CS1,..,CS4, die im Stapel alternierend angeordnet und miteinander verbunden sind. Der Stapel aus Blechen S1,..,S4 und CS1,..,CS4 bildet die Struktur des Katalysators 10. Durch die gewellten Bleche CS1,..,CS4 wird zwischen benachbarten ebenen Blechen eine Vielzahl von separaten, parallelen Kanälen erzeugt, von denen in Fig. 1 vier ausgewählte und übereinander angeordnete mit den Bezugszeichen C1,..,C4 bezeichnet sind.

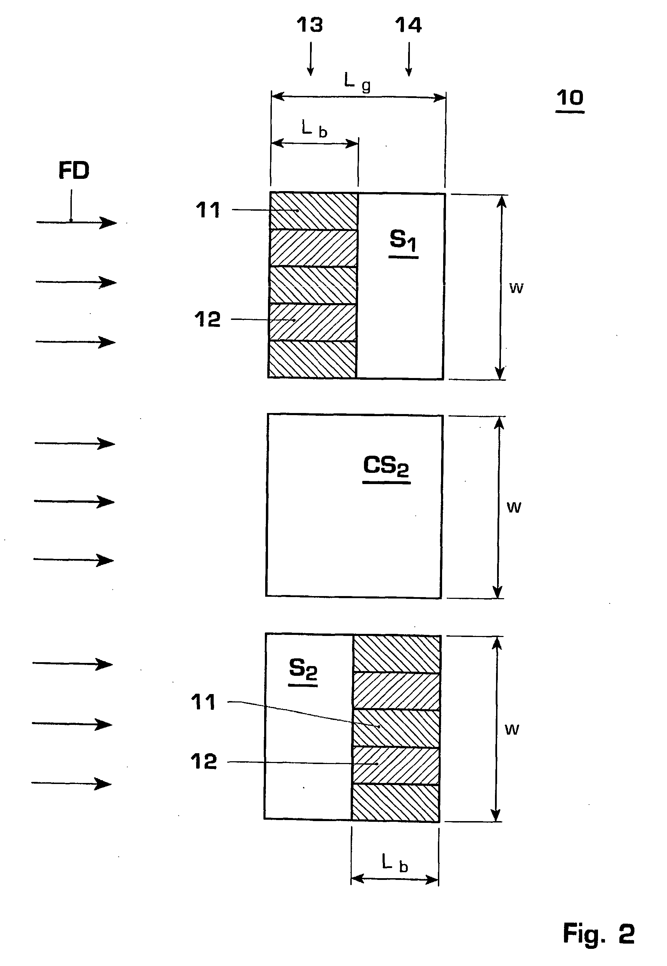

Die gewellten Bleche CS1,..,CS4 sind sehr dünn und haben typischerweise eine Dicke von 0,05 mm. Die ebenen Bleche S1,..,S4 sind aus Gründen einer guten Festkörper-Wärmeleitung demgegenüber vorzugsweise erheblich dicker. Die ebenen Bleche S1, S3 und S2, S4 sind für sich genommen praktisch identisch (wie dies in Fig. 2 zu sehen ist), werden aber im Stapel in einer unterschiedlichen Anordnung eingebaut. Der gesamte Katalysator 10 ist aus einer bestimmten Anzahl von übereinander angeordneten Einheiten aufgebaut, wobei jede Einheit aus der Folge von Blechen S1, CS2, S2, CS3 besteht und damit eine Höhe von zwei Kanaldurchmessern aufweist.

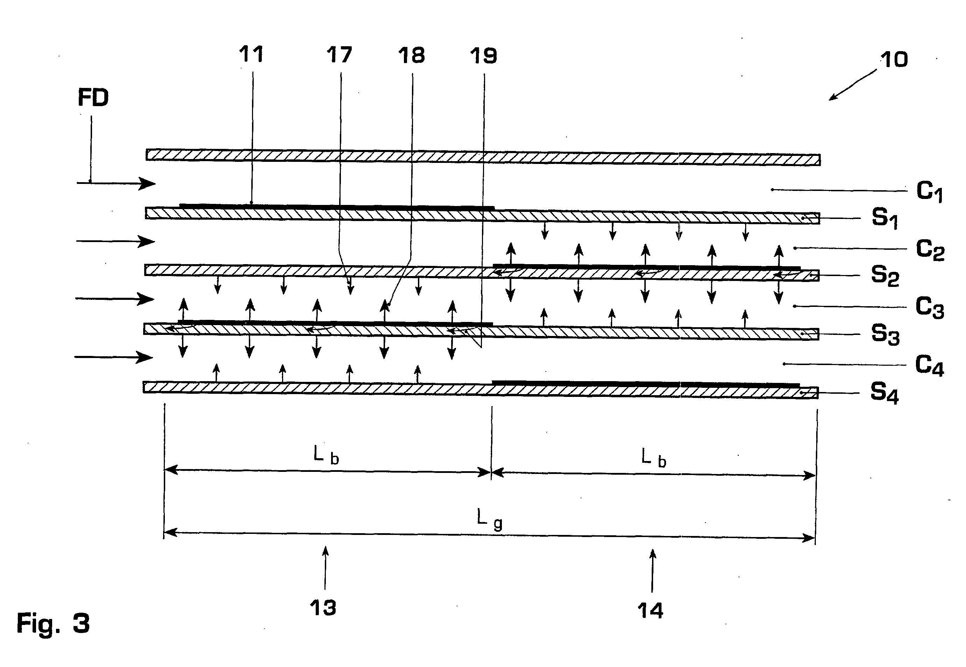

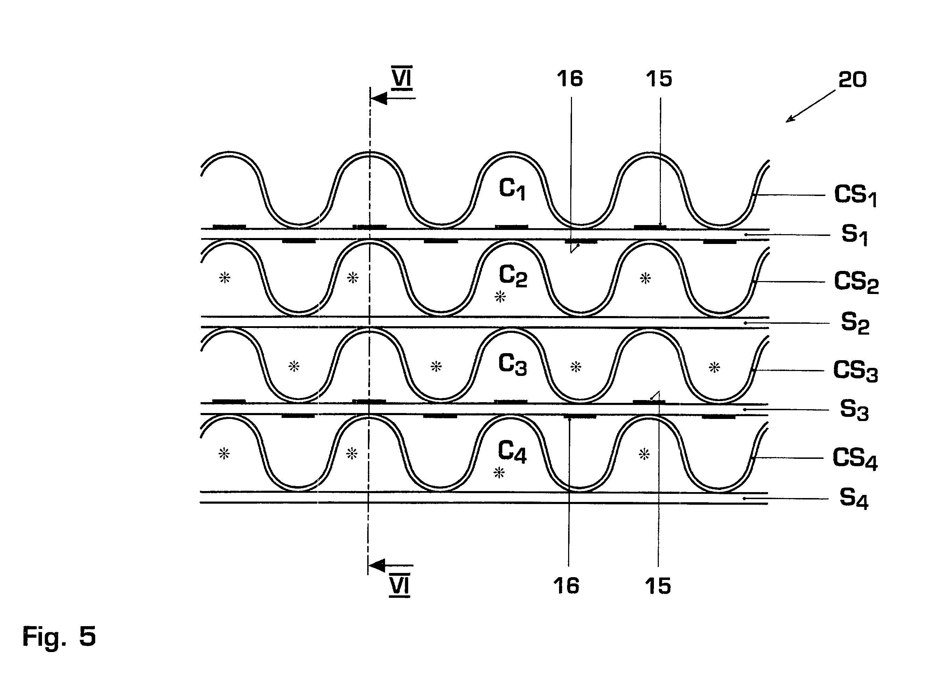

Die für die Katalysatorfunktion notwendige katalytische Beschichtung 11, 12 ist in Form von sich in Strömungsrichtung FD (Fig. 2) erstreckenden Bändern auf den ebenen Blechen S1,..,S4 in einer bestimmten Konfiguration angeordnet: Die Bleche, die eine gesamte Länge Lₜₒₜₐₗ haben, sind in Strömungsrichtung FD in zwei oder noch mehr verschiedene Abschnitte 13, 14 unterteilt, die abwechselnd mit katalytischen Beschichtungen 11, 12 versehen sind oder gar keine katalytische Beschichtung aufweisen. Innerhalb eines mit katalytischen Beschichtungen versehenen Abschnitts (Abschnitt 13 beim ebenen Blech S1 bzw. Abschnitt 14 beim ebenen Blech S2 in Fig. 2) ist quer zur Strömungsrichtung FD über die Breite w das Blech jeweils abwechselnd auf der Oberseite (katalytische Beschichtung 11) und auf der Unterseite (katalytische Beschichtung 12) beschichtet, so dass die ebenen Bleche S1,..,S4 an keiner Stelle auf beiden Seiten gleichzeitig mit einer katalytischen Beschichtung versehen sind. Bei benachbarten ebenen Blechen (z. B. S1 und S2) sind die mit katalytischen Beschichtungen 11, 12 versehenen Abschnitt so gegeneinander versetzt (Fig. 2, 3), dass die Beschichtungen alternierend auftreten. Zunächst ist das Blech S1 im ersten Abschnitt 13 über die Länge L_{b} beschichtet, während das Blech S2 in diesem Abschnitt unbeschichtet ist. Im nächsten Abschnitt 14 ist dann das Blech S1 unbeschichtet, während das Blech S2 beschichtet ist. Es gibt daher in jedem Abschnitt bestimmte Kanäle (in Fig. 1 wie auch in Fig. 5 mit einem (*) gekennzeichnet), die in diesem Abschnitt keine katalytische Beschichtung 11, 12 aufweisen.

Die Figuren 1 und 3 zeigen, wie auf der ersten Länge L_{b} (dem ersten Abschnitt 13) die Bleche CS2, S2 und CS3 so angeordnet sind, dass sie Kanäle mit einer relativ grossen Oberfläche bilden, deren unbeschichtete Wände die von den katalytisch aktiven Beschichtungen 11, 12 auf den Blechen S1 und S3 abgestrahlte Wärme absorbieren und durch Konvektion im jeweiligen Kanal abführen. Fig. 3 unterscheidet deutlich zwischen den beschichteten und unbeschichteten Kanälen in einem Abschnitt (13). Im darauffolgenden Abschnitt (14) formen die Bleche CS1, S1, CS2 und CS3, S3, CS4 die unbeschichteten Kanäle, während das Blech S2 katalytisch aktiv ist und Wärme abstrahlt. Es ist vorteilhaft, wenn der Katalysator 10 mehr als zwei Abschnitte 13, 14 mit alternierender Beschichtung umfasst, weil dadurch die Gleichförmigkeit der Temperatur und der Brennstoffkonzentration innerhalb des Katalysators 10 verbessert wird. Im Interesse dieser Gleichförmigkeit und auch einer guten Durchmischung der austretenden Gase sollte vorzugsweise eine gerade Anzahl von Abschnitten 13, 14 vorhanden sein bzw. L_{g} = 2nL_{b} gelten, mit n=1,2,3,...

Die beim Ausführungsbeispiel auftretenden verschiedenen Arten des Wärmetransports lassen sich anhand von Fig. 3 erläutern: Von den unbeschichteten Flächen der Bleche S1,..,S4 wird Wärme, die von einer katalytischen Beschichtung abgegeben und absorbiert worden ist, mittels eines konvektiven Wärmetransports 17 (dünne, gerade Pfeile in Fig. 3) an die Strömung im Kanal angegeben. Von den mit einer katalytischen Beschichtung versehenen Abschnitten der Bleche S1,..,S4 wird Wärme über einen kombinierten konvektiven und strahlungsmässigen Wärmetransport 18 (dicke, gerade Pfeile in Fig. 3) an die Umgebung abgegeben. Schliesslich findet noch ein Wärmetransport 19 über Festkörperleitung innerhalb der Bleche S1,..,S4 statt (dünne, gekrümmte Pfeile in Fig. 3).

In Fig. 3 ist gut zu erkennen, dass die ebenen Bleche S1,...,S4 jeweils am Eintritt und am Austritt des Katalysators unbeschichtet sind. Bevorzugt weist diese unbeschichtete Fläche am Eintritt eine Tiefe von ca. 2 bis 5 mm und am Austritt eine Tiefe von ca. 10-15 mm auf. Damit wird einerseits eine bessere mechanische Festigkeit in diesen Bereichen erzielt, andererseits kann man den Katalysator besser herstellen, da sich die ebenen Bleche S1,...,S4 besser mit den gewellten Blechen CS1,...,CS4 verschweissen lassen. Am Austritt dient der unbeschichtete Bereich zusätzlich als Strahlungsschutz gegen eine homogen Flamme bzw. eine heisse Flamme ausserhalb des Katalysators.

Die grundsätzlichen Vorteile der in Fig. 1-3 gezeigten Konfiguration sind die zwei folgenden:
- Die Wärmestrahlung absorbierende Oberfläche wird maximiert, so dass die Oberfläche der katalytischen Beschichtungen 11, 12 auf ein akzeptables Niveau heruntergekühlt wird.
- Alle Kanäle sind in wenigstens einem der Abschnitte mit einer katalytischen Beschichtung versehen, so dass eine gleichmässige Reduzierung des Brennstoffanteils zum Ausgang des Katalysators hin gewährleistet ist, wodurch eine homogene Zündung innerhalb des Katalysators verhindert wird.

Es ergeben sich durch die dargestellte Katalysatorstruktur aber noch weitere Vorteile: Zum einen sind die aus dem Katalysator austretenden heissen Gase wesentlich gleichförmiger (d.h. mit dem gleichen Grad an chemischer Umwandlung in allen Kanälen) als bei herkömmlichen Katalysatorkonfigurationen. Da ein solcher katalytischer Reaktor in Gasturbinen eingesetzt wird, wo ein Teil des Brennstoffes homogen verbrannt wird, ermöglicht dies eine leichter steuerbare und sauberere, d.h., mit geringeren NOx- und CO-Anteilen beaufschlagte, Verbrennung stromabwärts vom Katalysator. Zum anderen sind die mit der katalytischen Beschichtung 11, 12 versehenen Bleche S1,..,S4 - wie bereits oben erwähnt - verhältnismässig dick, damit Wärme stromaufwärts weitergeleitet werden kann, um (a) die Kühlung im Bereich der Beschichtung und (b) den "light-off" in den stromaufwärts liegenden Bereichen zu verbessern.

Ein weiterer Punkt sind die Druckverluste: In früheren technischen Lösungen werden verschlungene Kanäle vorgeschlagen, die zu höheren Druckverlusten führen und stärker für strukturelle Deformationen während des Betriebes zugänglich sind (d.h., die Kanäle verbiegen sich und verändern so merklich die Wirkung des Katalysators). Werden dagegen - wie bei der vorliegenden Lösung - gerade Kanäle verwendet, verringern sich nicht nur die Druckverluste, die beim Wirkungsgrad von Gasturbinen eine entscheidende Rolle spielen, sondern es werden auch die Herstellungs- und Montageprozesse deutlich vereinfacht. Schliesslich können die nicht mit den katalytischen Beschichtungen bedeckten Oberflächen der Kanäle mit einer speziellen Beschichtung versehen werden, welche die Absorption der Wärmestrahlung verbessert. Diese Beschichtung kann z. B. auch Rekombinationsreaktionen von Radikalen (OH, H, O) in der Gasphase begünstigen, um eine homogene Zündung zu hemmen.

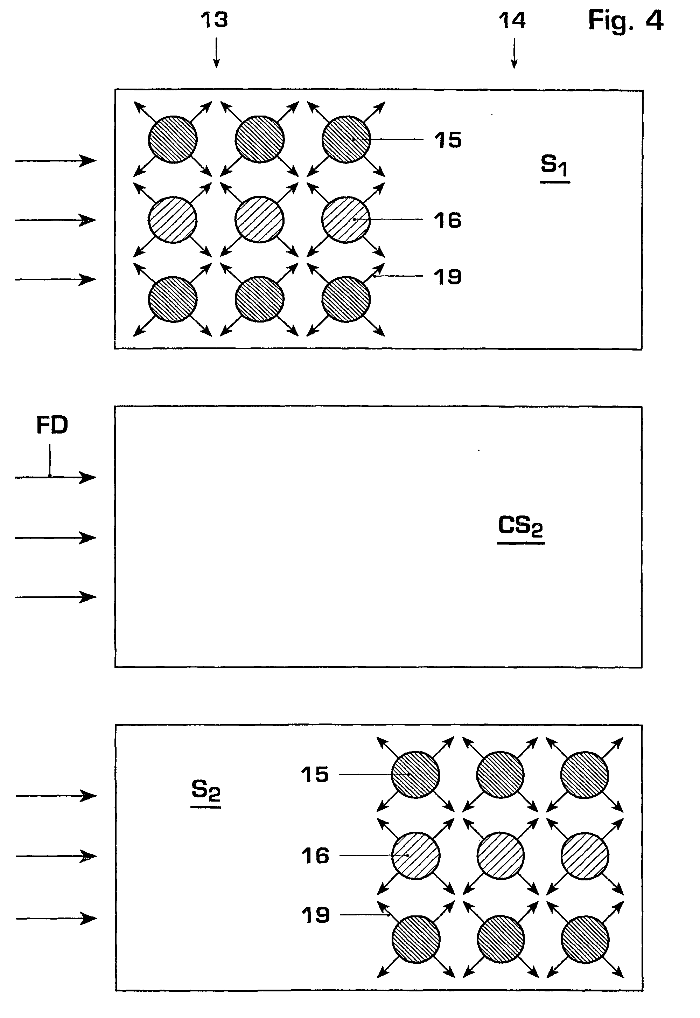

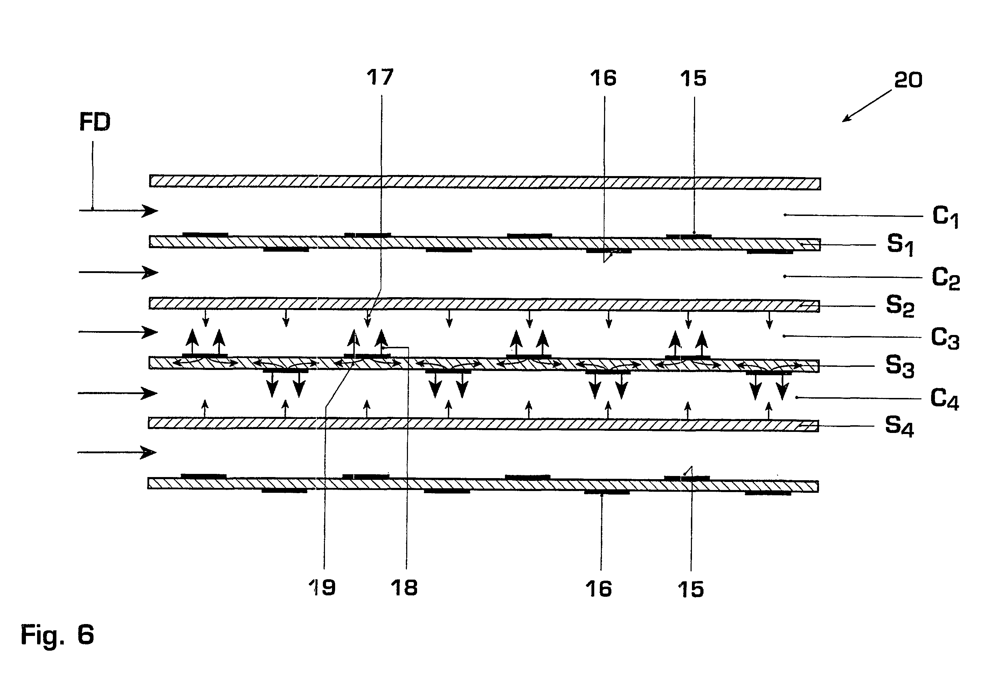

In Abwandlung des in Fig. 1 bis 3 dargestellten Ausführungsbeispiels kann die Kühlung der beschichteten Flächen durch eine Erweiterung des leitenden Wärmetransports (19 in Fig. 3) verbessert werden. Dies wird gemäss Fig. 4 dadurch erreicht, dass anstelle der durchgehenden Bänder mit katalytischer Beschichtung (Fig. 2) inselförmige katalytische Beschichtungen 15, 16 vorgesehen werden. Im wesentlichen wird hier Wärme durch einen leitenden Wärmetransport 19 von den heissen Inseln der katalytischen Beschichtung 15, 16 in die vergleichsweise kühlen Regionen zwischen den Inseln transportiert und dort durch einen konvektiven Wärmetransport an das strömende Medium abgeführt. Eine zu Fig. 1 vergleichbare Frontansicht der Struktur des resultierenden Katalysators 20 ist in Fig. 5 dargestellt. Den Längsschnitt durch den Katalysator 20 entlang der Ebene VI-VI in Fig. 5 zeigt Fig. 6. Auch hier ist wieder eine Kombination aus rein konvektivem Wärmetransport 17, gemischtem konvektiven und strahlungsmässigem Wärmetransport 18 und leitendem Wärmetransport 19 verwirklicht.

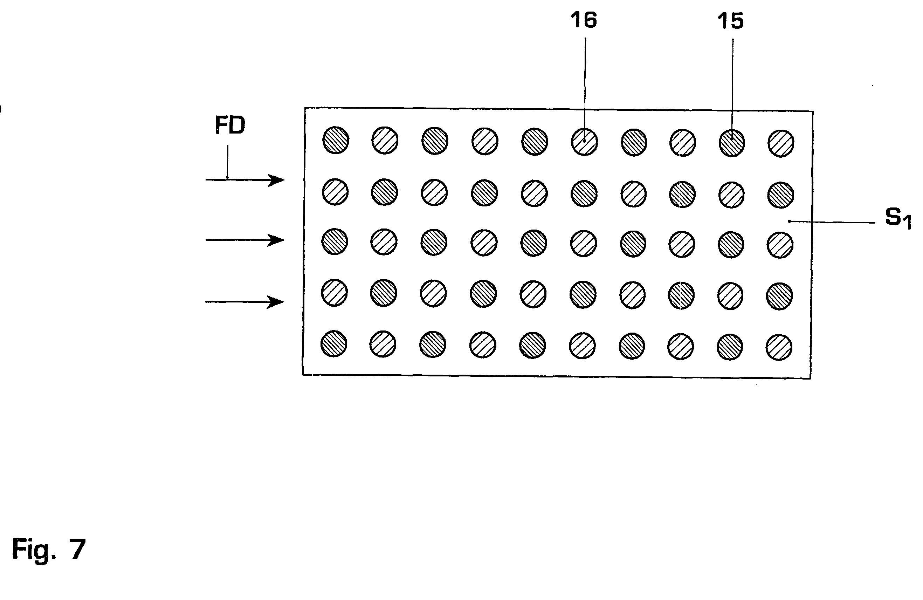

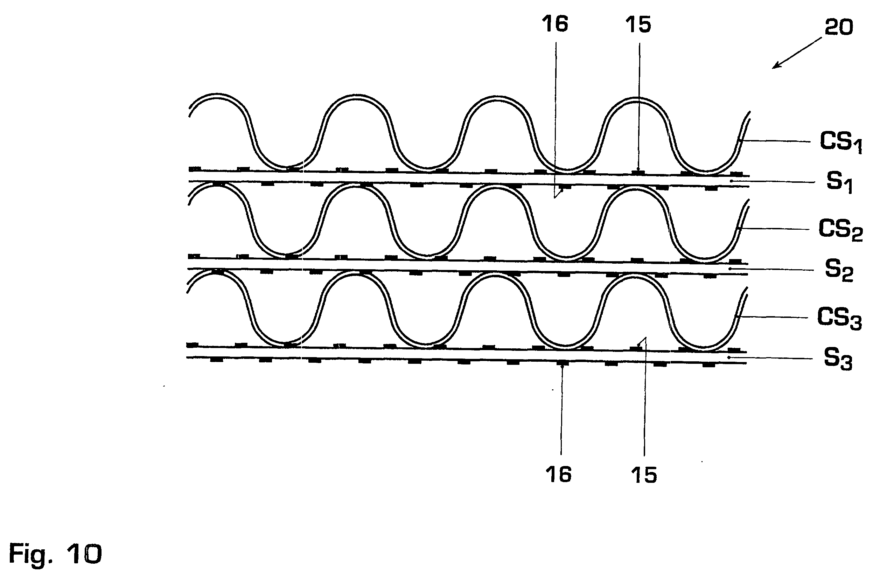

Die Inseln mit der katalytischen Beschichtung 15, 16 können im Vergleich zum Kanaldurchmesser relativ klein gemacht werden, wodurch sich die folgenden weiteren Vorteile ergeben:
- Eine noch höhere Gleichförmigkeit in allen Kanälen.
- Eine noch bessere Ableitung der Wärme aus den katalytisch beschichteten Inseln, da sich die Längen für die Wärmeleitung verringern (die Wärmeleitung ist umgekehrt proportional zum Durchmesser der Inseln).
Die geringen Ausmasse der katalytisch beschichteten Inseln 15, 16 ermöglichen es, innerhalb jedes Kanals mehr als eine Reihe (in Strömungsrichtung) unterzubringen. Ein Beispiel für eine solche Konfiguration ist in Fig. 10 in einer zu Fig. 5 vergleichbaren Darstellung wiedergegeben. Es ist aber auch möglich, die katalytisch beschichteten Inseln 15, 16 auf den Blechen S1,..,S4 gleichmässig alternierend in der in Fig. 7 gezeigten Weise anzuordnen.

Um den Umsatz zu erhöhen ist es vorteilhaft, wenn auch die gewellten Bleche CS1,...,CS4 wie die ebenen Bleche S1,...,S4 abschnittsweise beschichtet sind, wobei auch hier aus Gründen der Wärmeabfuhr nicht auf beiden Seiten der gewellten Bleche gleichzeitig eine Beschichtungsfläche vorhanden sein darf. Gegenüber den in den Fig. 1 bis 7 dargestellten Ausführungsbeispielen, bei denen die gewellten Bleche CS1,...,CS4 unbeschichtet sind, geht dies allerdings etwas auf Kosten der Temperatur. Die abschnittsweise Beschichtung der gewellten und ebenen Bleche soll wiederum so erfolgen, dass innerhalb der Kanäle C1,.. ,C4 den Abschnitten mit den katalytischen Beschichtungen 11, 12,15, 16 jeweils unbeschichtete Abschnitte gegenüberliegen.

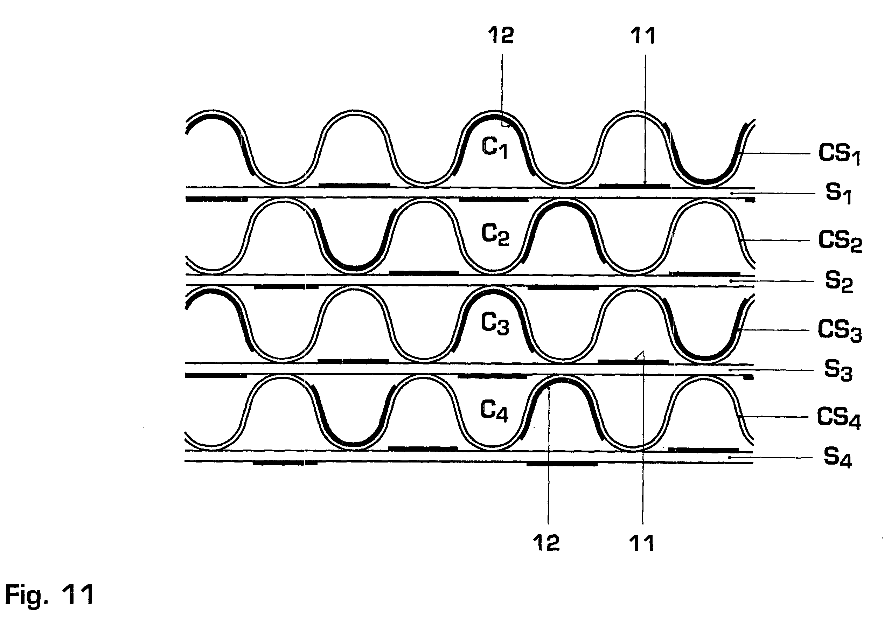

Fig. 11 zeigt in einer schematischen Darstellung die Sicht in Strömungsrichtung auf die Einlassseite eines Katalysators in einem derartigen weiteren Ausführungsbeispiel. Im Vergleich zu dem in Fig. 1 dargestellten ersten Ausführungsbeispiel, bei dem unbeschichtete gewellte Bleche CS1,...,CS4, verwendet wurden, ist aus Fig. 11 deutlich zu erkennen, dass die katalytische Beschichtungsfläche innerhalb der Kanäle C1,...,C4 deutlich durch die Verwendung von gewellten abschnittsweise beschichteten Blechen erhöht ist (wesentlich mehr als 25 % Beschichtungsgrad) und dadurch vorteilhaft der Umsatz des Katalysators gesteigert werden kann. Sowohl bei den ebenen Blechen S1,...,S4 als auch bei den gewellten Blechen CS1,...,CS4 wurde darauf geachtet, dass an keiner Stelle die Bleche gleichzeitig an ihrer Ober- und Unterseite mit einer katalytischen Beschichtung versehen sind, damit während des Betriebes die Wärmeabfuhr gewährleistet ist. Fig. 11 zeigt ausserdem, dass im Gegensatz zu dem in Fig. 1 dargestellten Ausführungsbeispiel ebene und gewellte Bleche S1,..,S4, CS1,...,CS4 mit annähernd gleich grosser Dicke verwendet werden können.

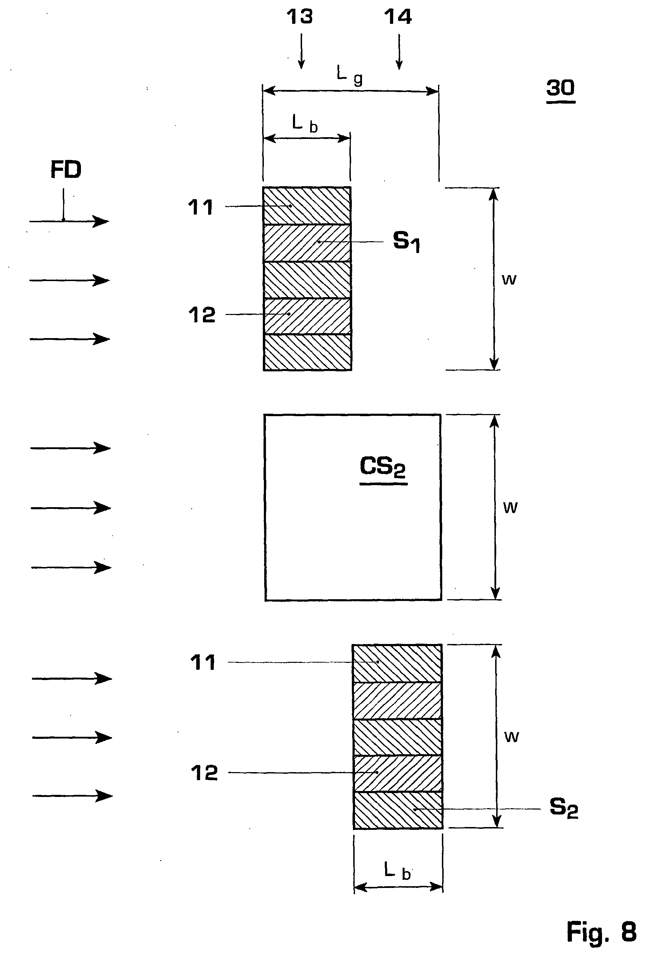

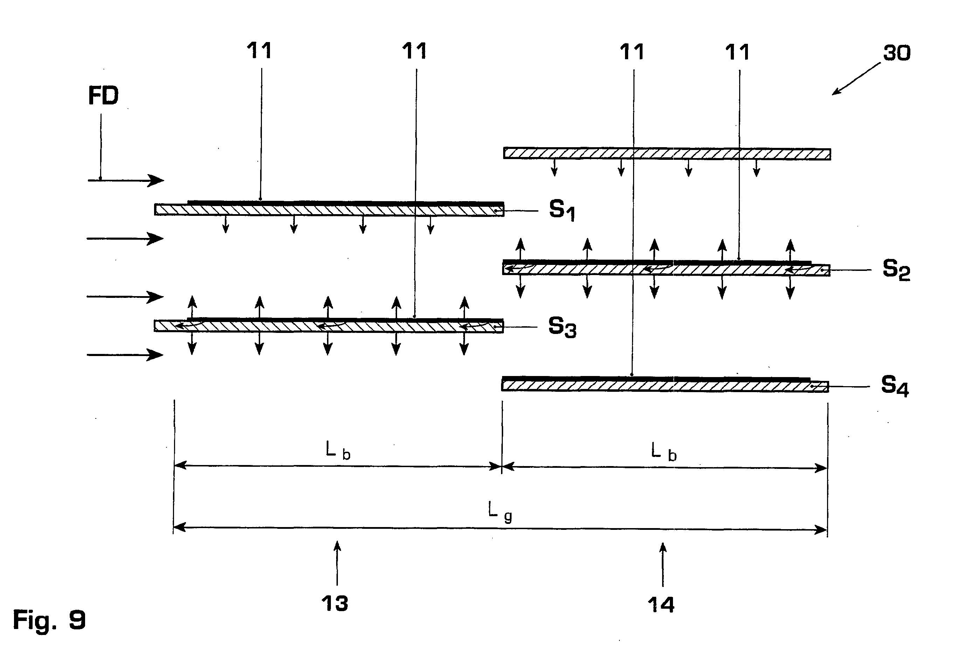

Eine weitere Abwandlung der in den Fig. 1 bis 3 bzw. in Fig. 11 gezeigten Ausführungsbeispiele, bei denen alle bisher erläuterten Arten der katalytischen Beschichtungen eingesetzt werden können, ist in den Fig. 8 und 9 dargestellt. Der dort gezeigte Katalysator 30 verwendet ebene Bleche S1,..,S4, deren Länge nicht mehr L_{g}, sondern nur noch L_{b} beträgt. Die Bleche sind auf dieser reduzierten Länge vollständig nach einer der bisher beschriebenen Arten mit katalytischen Beschichtungen 11, 12 (oder 15, 16) versehen. Der Blick von vorne auf den Katalysator 30 gleicht dem in Fig. 1. Der Längsschnitt in Fig. 9 zeigt jedoch die Unterschiede der Konfiguration mit den kurzen, ineinander übergehenden Kanalabschnitten. Die Vorteile einer solchen Abwandlung sind zweifach:
- Sie ermöglicht eine Mischung zwischen den Kanälen, welche die Gleichförmigkeit von Temperatur und Brennstoffanteil weiter verbessert.
- Die Ausbildung von (laminaren) Randschichten entlang den katalytisch beschichteten Oberflächen wird wiederholt unterbrochen, wodurch sich der Reaktionsprozess aus einem Bereich mit diffusionskontrollierter Reaktion entfernt und damit die Oberflächentemperaturen reduziert werden. Die Länge L_{b} kann vorzugsweise von der gleichen Grössenordnung sein wie die Längen, über die sich die Randschichten entwickeln.

Eine weitere mögliche Konfiguration zeichnet sich dadurch aus, dass alle ebenen Bleche S1,..,S4 in gleicher Weise fortlaufend beschichtet sind, wie dies in Fig. 7 gezeigt ist. Anstelle der alternierenden Beschichtung auf benachbarten Blechen ergibt sich die in Fig. 10 dargestellte vereinfachte Struktur. Da in diesem Fall die unbeschichteten Bereiche der Kanäle im Vergleich zu den weiter oben beschriebenen Varianten deutlich verringert werden, wird die Kühlung durch Wärmestrahlung reduziert und das Hauptgewicht liegt auf der Kühlung durch Wärmeleitung und konvektivem Wärmetransport.

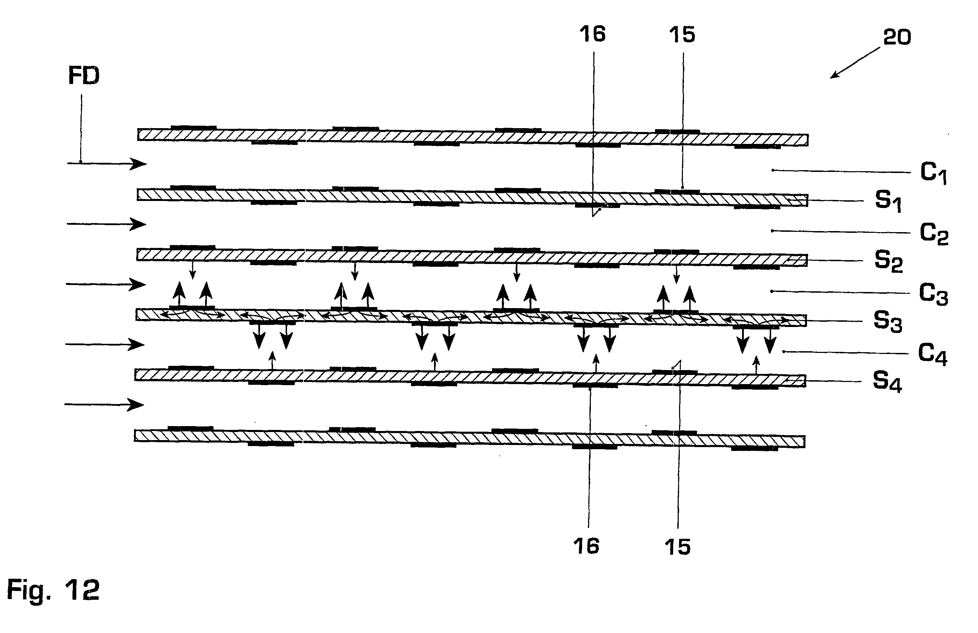

Fig. 12 zeigt eine weitere Ausführungsvariante analog zu Fig. 6. Im Vergleich zu der Variante nach Fig. 6 ist hier eine grössere Beschichtungsfläche vorhanden, da jedes ebene Blech S1,...,S4 und nicht nur jedes zweite beschichtet ist.

Insgesamt ergibt sich mit der Erfindung ein Katalysator, der sich durch die folgenden Eigenschaften und Vorteile auszeichnet:
- Die Oberflächentemperatur der katalytisch beschichteten Bereiche wird unter der zur Deaktivierung führenden Temperatur gehalten.
- Das Risiko einer homogenen Zündung im Katalysator wird minimiert.
- Wärme wird in den (dickeren) Trägerplatten für die Beschichtung weitergeleitet; hierdurch wird der "light-off" verbessert und aufgrund der thermischen Trägheit die Stabilität des Systems erhöht.
- Druckverluste werden verringert und die Herstellbarkeit wird verbessert bzw. vereinfacht.
- Die aus dem Katalysator austretenden heissen Gase sind gleichmässiger durchmischt, so dass sich eine besser steuerbare homogene Verbrennung und eine sauberere Verbrennung mit geringeren NOx- und CO-Anteilen ergibt.

Selbstverständlich ist die Erfindung nicht auf die beschriebenen Ausführungsbeispiele beschränkt. Beispielsweise ist der Einsatz von beschichteten gewellten Blechen CS1,..,CS4 in allen beschriebenen Ausführungsbeispielen anstelle der unbeschichteten gewellten Bleche CS1,...,CS4 zur Bildung der Kanäle C1,...,C4 möglich.

### BEZUGSZEICHENLISTE

- 10,20,30: Katalysator
- 11,12: katalytische Beschichtung
- 13,14: Abschnitt
- 15,16: katalytische Beschichtung
- 17,18,19: Wärmetransport
- C1,..,C4: Kanal)
- CS1,..,CS4: gewelltes Blech
- FD: Strömungsrichtung
- S1,..,S4: ebenes Blech
- w: Breite der Bleche
- L_{b}: beschichtete Länge
- L_{g}: Länge (insgesamt)

## Patentansprüche

1. Katalysator (10, 20, 30), welcher eine Mehrzahl von in einem Stapel übereinander angeordneten, voneinander beabstandeten, ebenen Blechen (S1,..,S4) umfasst, zwischen denen jeweils eine Mehrzahl von geraden, in Strömungsrichtung (FD) parallel verlaufenden Kanälen (C1,..,C4) ausgebildet sind, die von den ebenen Blechen (S1,..,S4) begrenzt werden, wobei die ebenen Bleche (S1,..,S4) mit katalytischen Beschichtungen (11, 12; 15, 16) derart versehen sind, dass in allen Kanälen (C1,..,C4) katalytische Beschichtungen (11, 12; 15, 16) vorhanden sind, dass die katalytischen Beschichtungen (11, 12; 15, 16) auf vorgegebene Abschnitte (13, 14) der Kanäle (C1,..,C4) beschränkt sind, und dass innerhalb der Kanäle (C1,..,C4) den Abschnitten mit den katalytischen Beschichtungen (11, 12; 15, 16) zur Absorption der von den katalytischen Beschichtungen (11, 12; 15, 16) im Betrieb abgegebenen Wärmestrahlung jeweils unbeschichtete Abschnitte gegenüberliegen,
**dadurch gekennzeichnet, dass** die Kanäle (C1,..,C4) durch gewellte Bleche (CS1,..,CS4) gebildet werden, welche jeweils zwischen den ebenen Blechen (S1,..,S4) angeordnet und mit diesen verbunden sind, und dass die gewellten Bleche (CS1,..,CS4) entweder unbeschichtet sind, oder zwecks Erhöhung des Umsatzes abschnittsweise derart katalytisch beschichtet sind, dass innerhalb der Kanäle (C1,..,C4) den Abschnitten mit den katalytischen Beschichtungen (11, 12; 15, 16) zur Absorption der von den katalytischen Beschichtungen (11, 12; 15, 16) im Betrieb abgegebenen Wärmestrahlung jeweils unbeschichtete Abschnitte gegenüberliegen.

2. Katalysator nach Anspruch 1, **dadurch gekennzeichnet, dass** die katalytisch unbeschichteten Abschnitte der Kanäle (C1,...,C4) eine spezielle Beschichtung aufweisen, vorzugsweise zur Verbesserung der Absorption der Wärmestrahlung oder zur Begünstigung von Rekombinationsreaktionen von Radikalen.

3. Katalysator nach einem der Ansprüche 1 bis 2, **dadurch gekennzeichnet, dass** die gewellten Bleche (CS1,..,CS4) eine Dicke von weniger als 0,1 mm, vorzugsweise etwa 0,05 mm, aufweisen, und dass die Dicke der ebenen Bleche (S1,..,S4) wesentlich grösser ist

4. Katalysator nach einem der Ansprüche 1 bis 2, **dadurch gekennzeichnet, dass** die Dicke der ebenen Bleche (S1,...,S4) und die Dicke der gewellten Bleche (CS1,...,CS4) etwa gleich gross ist.

5. Katalysator nach einem der Ansprüche 1 bis 4, **dadurch gekennzeichnet, dass** die ebenen Bleche (S1, ...,S4) jeweils am Eintritt und am Austritt des Katalysators unbeschichtet sind.

6. Katalysator nach Anspruch 5, **dadurch gekennzeichnet, dass** die unbeschichtete Fläche der Bleche (S1,...,S4) am Eintritt eine Tiefe von ca. 2 bis 5 mm und am Austritt eine Tiefe von ca. 10-15 mm aufweist.

7. Katalysator nach einem der Ansprüche 1 bis 6, **dadurch gekennzeichnet, dass** alle Kanäle (C1,..C4) im wesentlichen denselben Querschnitt aufweisen.

8. Katalysator nach einem der Ansprüche 1 bis 6, **dadurch gekennzeichnet, dass** die ebenen Bleche (S1,..,S4) in Strömungsrichtung (FD) eine Gesamtlänge (L_{g}) aufweisen, dass die Gesamtlänge (L_{g}) in eine gerade Anzahl von Abschnitten (13, 14) einer beschichteten Länge (L_{b}) unterteilt ist, und dass die einzelnen ebenen Bleche (S1,..,S4) über die Abfolge der Abschnitte (13, 14) alternierend mit katalytischen Beschichtungen (11, 12; 15, 16) versehen bzw. unbeschichtet sind, derart, dass bei im Stapel benachbarten ebenen Blechen die Abfolge der beschichteten und unbeschichteten Abschnitte (13, 14) jeweils um eine beschichtete Länge (L_{b}) in Strömungsrichtung (FD) gegeneinander verschoben ist.

9. Katalysator nach Anspruch 8, **dadurch gekennzeichnet, dass** bei den ebenen Blechen (S1,..,S4) innerhalb der mit den katalytischen Beschichtungen (11, 12) versehenen Abschnitte (13, 14) die katalytische Beschichtung (11, 12) in Form von parallelen, sich in Strömungsrichtung (FD) erstreckenden, durchgehenden Streifen gleicher Breite vorliegt, welche über die Breite (w) der Bleche alternierend auf der Ober- und Unterseite des Bleches angeordnet sind, derart, dass das Blech immer nur auf einer Seite beschichtet ist.

10. Katalysator nach Anspruch 9, **dadurch gekennzeichnet, dass** jedem der Kanäle (C1,..,C4) jeweils ein Streifen der katalytischen Beschichtungen (11, 12) zugeordnet ist.

11. Katalysator nach Anspruch 8, **dadurch gekennzeichnet, dass** bei den ebenen Blechen (S1,..,S4) innerhalb der mit den katalytischen Beschichtungen (15, 16) versehenen Abschnitte (13, 14) die katalytische Beschichtung (15, 16) in Form von parallelen, sich in Strömungsrichtung (FD) erstreckenden Reihen von einzelnen, inselförmigen Bereichen gleicher Abmessungen vorliegt, welche Reihen über die Breite (w) der Bleche alternierend auf der Ober- und Unterseite des Bleches angeordnet sind, derart, dass das Blech immer nur auf einer Seite beschichtet ist.

12. Katalysator nach Anspruch 11, **dadurch gekennzeichnet, dass** jedem der Kanäle (C1,..,C4) jeweils eine Reihe der inselförmigen katalytischen Beschichtungen (15, 16) zugeordnet ist.

13. Katalysator nach einem der Ansprüche 1 bis 12, **dadurch gekennzeichnet, dass** der Katalysator (3) in Strömungsrichtung (FD) eine Gesamtlänge (L_{g}) aufweist, dass die Gesamtlänge (L_{g}) in eine gerade Anzahl von Abschnitten (13, 14) einer beschichteten Länge (L_{b}) unterteilt ist, und dass die einzelnen ebenen Bleche (S1,..,S4) sich jeweils nur über einen der Abschnitte (13, 14) erstrecken und mit katalytischen Beschichtungen (11, 12; 15, 16) versehen sind, derart, dass die im Stapel benachbarten ebenen Bleche bezüglich der Abschnitte (13, 14) jeweils auf Lücke angeordnet sind.

14. Katalysator nach Anspruch 13, **dadurch gekennzeichnet, dass** die katalytische Beschichtung (11, 12) in Form von parallelen, sich in Strömungsrichtung (FD) erstreckenden, durchgehenden Streifen gleicher Breite vorliegt, welche über die Breite (w) der Bleche alternierend auf der Ober- und Unterseite des Bleches angeordnet sind, derart, dass das Blech immer nur auf einer Seite beschichtet ist.

15. Katalysator nach Anspruch 14, **dadurch gekennzeichnet, dass** jedem der Kanäle (C1,..,C4) jeweils ein Streifen der katalytischen Beschichtungen (11, 12) zugeordnet ist.

16. Katalysator nach Anspruch 13, **dadurch gekennzeichnet, dass** die katalytische Beschichtung (15, 16) in Form von parallelen, sich in Strömungsrichtung (FD) erstreckenden Reihen von einzelnen, inselförmigen Bereichen gleicher Abmessungen vorliegt, welche Reihen über die Breite (w) der Bleche alternierend auf der Ober- und Unterseite des Bleches angeordnet sind, derart, dass das Blech immer nur auf einer Seite beschichtet ist.

17. Katalysator nach Anspruch 16, **dadurch gekennzeichnet, dass** jedem der Kanäle (C1,..,C4) jeweils eine Reihe der inselförmigen katalytischen Beschichtungen (15, 16) zugeordnet ist.

18. Katalysator nach einem der Ansprüche 1 bis 6, **dadurch gekennzeichnet, dass** die ebenen Bleche (S1,..,S4) und gegebenenfalls die gewellten Bleche (CS1,...,CS4) über die Gesamtlänge (L_{g}) mit einer katalytischen Beschichtung (15, 16) in Form von parallelen, sich in Strömungsrichtung (FD) erstreckenden Reihen von einzelnen, inselförmigen Bereichen gleicher Abmessungen versehen sind, wobei die inselförmigen Bereiche innerhalb der Reihen und quer zu den Reihen alternierend auf der Ober- und Unterseite des Bleches angeordnet sind, derart, dass das Blech immer nur auf einer Seite beschichtet ist.

19. Katalysator nach Anspruch 18; **dadurch gekennzeichnet, dass** jedem der Kanäle (C1,..,C4) jeweils wenigstens eine Reihe der inselförmigen katalytischen Beschichtungen (15, 16) zugeordnet ist.

20. Katalysator nach einem der Ansprüche 1 bis 19, **dadurch gekennzeichnet, dass** der Katalysator für exothermischen Reaktionen verwendet wird, bei denen eine begleitende homogene Gasphasenreaktion zu vermeiden ist.

21. Katalysator nach Anspruch 20, **dadurch gekennzeichnet, dass** der Katalysator für den Einsatz bei Gasturbinen verwendet wird.

## Claims

1. Catalyst structure (10, 20, 30), which comprises a plurality of planar metal sheets (S1, ..., S4), which are arranged above one another in a stack and spaced apart from one another and between which in each case a plurality of straight passages (C1, ..., C4), which run parallel in the direction of flow (FD) and are delimited by the planar metal sheets (S1, ..., S4), are formed, the planar metal sheets (S1, ..., S4) being provided with catalytic coatings (11, 12; 15, 16), in such a manner that catalytic coatings (11, 12; 15, 16) are present in all the passages (C1, ..., C4), that the catalytic coatings (11, 12; 15, 16) are restricted to predetermined sections (13, 14) of the passages (C1, ..., C4), and that within the passages (C1, ..., C4) uncoated sections for absorbing the thermal radiation emitted by the catalytic coatings (11, 12; 15, 16) in operation in each case lie opposite the sections with the catalytic coatings (11, 12; 15, 16), **characterized in that** the passages (C1, ..., C4) are formed by corrugated metal sheets (CS1, ..., CS4), which are in each case arranged between the planar metal sheets (S1, ..., S4) and are joined to the latter, and **in that** the corrugated metal sheets (CS1, ..., CS4) are either uncoated or, to increase the conversion rate, are catalytically coated in sections, in such a manner that, within the passages (C1, ..., C4) uncoated sections for absorbing the thermal radiation emitted by the catalytic coatings (11, 12; 15, 16) in operation in each case lie opposite the sections comprising the catalytic coatings (11, 12; 15, 16).

2. Catalyst structure according to Claim 1, **characterized in that** the catalytically uncoated sections of the passages (C1, ..., C4) have a special coating, preferably for improving the absorption of the thermal radiation or for promoting recombination reactions of free radicals.

3. Catalyst structure according to one of Claims 1 to 2, **characterized in that** the corrugated metal sheets (CS1, ... CS4) are less than 0.1 mm thick, preferably approximately 0.05 mm thick, and **in that** the planar metal sheets (S1, ... S4) are significantly thicker.

4. Catalyst structure according to one of Claims 1 to 2, **characterized in that** the thickness of the planar metal sheets (S1, ... S4) and the thickness of the corrugated metal sheets (CS1, ..., CS4) are approximately equal.

5. Catalyst structure according to one of Claims 1 to 4, **characterized in that** the planar metal sheets (S1, ..., S4) are in each case uncoated at the entry and exit of the catalyst structure.

6. Catalyst structure according to Claim 5, **characterized in that** the uncoated surface of the metal sheets (S1, ..., S4) has a depth of approx. 2 to 5 mm at the entry and a depth of approx. 10-15 mm at the exit.

7. Catalyst structure according to one of Claims 1 to 6, **characterized in that** all the passages (C1, ..., C4) have substantially the same cross section.

8. Catalyst structure according to one of Claims 1 to 6, **characterized in that** the planar metal sheets (S1, ..., S4) have a total length (L_{g}) in the direction of flow (FD), **in that** the total length (L_{g}) is divided into an even number of sections (13, 14) of a coated length (L_{b}), and **in that** the individual planar metal sheets (S1, ..., S4), over the sequence of the sections (13, 14), are alternately provided with catalytic coatings (11, 12; 15, 16), and uncoated, in such a manner that in planar metal sheets which are adjacent in the stack, the sequence of coated and uncoated sections (13, 14) is in each case offset between the two metal sheets by one coated length (L_{b}) in the direction of flow (FD).

9. Catalyst structure according to Claim 8, **characterized in that** within the sections (13, 14) of the planar metal sheets (S1, ..., S4) which are provided with the catalytic coatings (11, 12), the catalytic coating (11, 12) is in the form of parallel, continuous strips of identical width which extend in the direction of flow (FD) and over the width (w) of the metal sheets are arranged alternately on the top side and underside of the metal sheet, in such a manner that the metal sheet is only ever coated on one side.

10. Catalyst structure according to Claim 9, **characterized in that** each of the passages (C1, ..., C4) is in each case assigned one strip of the catalytic coatings (11, 12).

11. Catalyst structure according to Claim 8, **characterized in that** within the sections (13, 14) of the planar metal sheets (S1, ..., S4) provided with the catalytic coatings (15, 16), the catalytic coating (15, 16) is in the form of parallel rows, extending in the direction of flow (FD), of individual, insular regions of identical dimensions, which rows, as seen over the width (w) of the metal sheets, are arranged alternately on the top side and underside of the metal sheet, in such a manner that the metal sheet is only ever coated on one side.

12. Catalyst structure according to Claim 11, **characterized in that** each of the passages (C1, ..., C4) is in each case assigned one row of the insular catalytic coatings (15, 16).

13. Catalyst structure according to one of Claims 1 to 12, **characterized in that** the catalyst structure (3) has a total length (L_{g}) in the direction of flow (FD), **in that** the total length (L_{g}) is divided into an even number of sections (13, 14) of a coated length (L_{b}), and **in that** the individual planar metal sheets (S1, .., S4) in each case extend and are provided with catalytic coatings (11, 12; 15, 16) over only one of the sections (13, 14), in such a manner that the adjacent planar metal sheets in the stack are in each case arranged staggered with respect to the sections (13, 14).

14. Catalyst structure according to Claim 13, **characterized in that** the catalytic coating (11, 12) is in the form of parallel, continuous strips of the same width which extend in the direction of flow (FD) and as seen over the width (w) of the metal sheets are arranged alternately on the top side and underside of the metal sheet, in such a manner that the metal sheet is only ever coated on one side.

15. Catalyst structure according to Claim 14, **characterized in that** each of the passages (C1, ..., C4) is in each case assigned one strip of the catalytic coatings (11, 12).

16. Catalyst structure according to Claim 13, **characterized in that** the catalytic coating (15, 16) is in the form of parallel rows, extending in the direction of flow (FD), of individual, insular regions of identical dimensions, which rows, as seen over the width (w) of the metal sheets, are arranged alternately on the top side and underside of the metal sheet, in such a manner that the metal sheet is only ever coated on one side.

17. Catalyst structure according to Claim 16, **characterized in that** each of the passages (C1, ..., C4) is in each case assigned one row of the insular catalytic coatings (15, 16).

18. Catalyst structure according to one of Claims 1 to 6, **characterized in that** the planar metal sheets (S1, ..., S4) and if appropriate the corrugated metal sheets (CS1, ..., CS4) are provided over the entire length (L_{g}) with a catalytic coating (15, 16) in the form of parallel rows, extending in the direction of flow (FD), of individual, insular regions of identical dimensions, the insular regions within the rows and transversely with respect to the rows being arranged alternately on the top side and underside of the metal sheet, in such a manner that the metal sheet is only ever coated on one side.

19. Catalyst structure according to Claim 18, **characterized in that** each of the passages (C1, ..., C4) is in each case assigned at least one row of the insular catalytic coatings (15, 16).

20. Catalyst structure according to one of Claims 1 to 19, **characterized in that** the catalyst structure is used for exothermic reactions in which an accompanying homogeneous gas phase reaction is to be avoided.

21. Catalyst structure according to Claim 20, **characterized in that** the catalyst structure is used in gas turbines.

## Revendications

1. Catalyseur (10, 20, 30), qui comprend une pluralité de tôles planes (S1, ..., S4) distantes l'une de l'autre, superposées l'une au-dessus de l'autre en une pile, entre lesquelles sont chaque fois formés plusieurs canaux rectilignes (C1, ..., C4) orientés parallèlement à la direction de l'écoulement (FD), qui sont délimités par les tôles planes (S1, ..., S4), dans lequel les tôles planes (S1, ..., S4) sont pourvues de revêtements catalytiques (11, 12; 15, 16) de telle façon que des revêtements catalytiques (11, 12; 15, 16) soient présents dans tous les canaux (C1, ..., C4), que les revêtements catalytiques (11, 12; 15, 16) soient limités à des parties prédéterminées (13, 14) des canaux (C1, ..., C4), et que, à l'intérieur des canaux (C1, ..., C4), des parties non revêtues soient disposées respectivement en face des parties pourvues des revêtements catalytiques (11, 12; 15, 16), pour l'absorption du rayonnement thermique émis en fonctionnement par les revêtements catalytiques (11, 12; 15, 16), **caractérisé en ce que** les canaux (C1, ..., C4) sont formés par des tôles ondulées (CS1, ..., CS4), qui sont chaque fois disposées entre les tôles planes (S1, ..., S4) et qui sont assemblées à ces dernières, et **en ce que** les tôles ondulées (CS1, ..., CS4) sont soit sans revêtement soit, pour augmenter le débit, avec un revêtement catalytique par parties de telle façon que, à l'intérieur des canaux (C1, ..., C4), des parties non revêtues soient disposées respectivement en face des parties pourvues des revêtements catalytiques (11, 12; 15, 16), pour l'absorption du rayonnement thermique émis en fonctionnement par les revêtements catalytiques (11, 12; 15, 16).

2. Catalyseur selon la revendication 1, **caractérisé en ce que** les parties sans revêtement catalytique des canaux (C1, ..., C4) présentent un revêtement spécial, de préférence pour améliorer l'absorption du rayonnement thermique ou pour favoriser les réactions de recombinaison de radicaux.

3. Catalyseur selon l'une quelconque des revendications 1 à 2, **caractérisé en ce que** les tôles ondulées (CS1, ..., CS4) présentent une épaisseur de moins de 0,1 mm, de préférence d'environ 0,05 mm, et **en ce que** l'épaisseur des tôles planes (S1, ..., S4) est sensiblement plus grande.

4. Catalyseur selon l'une quelconque des revendications 1 à 2, **caractérisé en ce que** l'épaisseur des tôles planes (S1, ..., S4) et l'épaisseur des tôles ondulées (CS1, ..., CS4) sont sensiblement égales.

5. Catalyseur selon l'une quelconque des revendications 1 à 4, **caractérisé en ce que** les tôles planes (S1, ..., S4) ne portent pas de revêtement chaque fois à l'entrée et à la sortie du catalyseur.

6. Catalyseur selon la revendication 5, **caractérisé en ce que** la surface non revêtue des tôles (S1, ..., S4) présente à l'entrée une profondeur d'environ 2 à 5 mm et à la sortie une profondeur d'environ 10 à 15 mm.

7. Catalyseur selon l'une quelconque des revendications 1 à 6, **caractérisé en ce que** tous les canaux (C1, ..., C4) présentent sensiblement la même section transversale.

8. Catalyseur selon l'une quelconque des revendications 1 à 6, **caractérisé en ce que** les tôles planes (S1, ..., S4) présentent une longueur totale (L_{g}) dans la direction de l'écoulement (FD), **en ce que** la longueur totale (L_{g}) est divisée en un nombre pair de parties (13, 14) d'une longueur revêtue (L_{b}), et **en ce que** les tôles planes individuelles (S1, ..., S4) sont en alternance pourvues de revêtements catalytiques (11, 12; 15, 16) ou ne sont pas revêtues suivant la succession des parties (13, 14), de telle façon que, dans les tôles planes voisines dans la pile, la succession des parties revêtues et non revêtues (13, 14) soit chaque fois décalée l'une par rapport à l'autre d'une longueur revêtue (L_{b}) dans la direction de l'écoulement (FD).

9. Catalyseur selon la revendication 8, **caractérisé en ce que**, pour les tôles planes (S1, ..., S4) à l'intérieur des parties (13, 14) pourvues des revêtements catalytiques (11, 12), le revêtement catalytique (11, 12) est réalisé sous la forme de bandes continues parallèles d'égale largeur s'étendant dans la direction de l'écoulement (FD), qui sont disposées en alternance sur la largeur (w) des tôles sur la face supérieure et la face inférieure des tôles, de telle façon que la tôle soit toujours revêtue uniquement sur une face.

10. Catalyseur selon la revendication 9, **caractérisé en ce qu'**une bande des revêtements catalytiques (11, 12) est chaque fois associée à chacun des canaux (C1, ..., C4).

11. Catalyseur selon la revendication 8, **caractérisé en ce que**, pour les tôles planes (S1, ..., S4) à l'intérieur des parties (13, 14) pourvues des revêtements catalytiques (15, 16), le revêtement catalytique (15, 16) est réalisé sous la forme de rangées parallèles de zones individuelles en forme d'îlots de mêmes dimensions, s'étendant dans la direction de l'écoulement (FD), rangées qui sont disposées en alternance sur la largeur (w) des tôles sur la face supérieure et la face inférieure des tôles, de telle façon que la tôle soit toujours revêtue uniquement sur une face.

12. Catalyseur selon la revendication 11, **caractérisé en ce qu'**une rangée des revêtements catalytiques en forme d'îlots (15, 16) est chaque fois associée à chacun des canaux (C1, ..., C4).

13. Catalyseur selon l'une quelconque des revendications 1 à 12, **caractérisé en ce que** le catalyseur (3) présente une longueur totale (L_{g}) dans la direction de l'écoulement (FD), **en ce que** la longueur totale (L_{g}) est divisée en un nombre pair de parties (13, 14) d'une longueur revêtue (L_{b}), et **en ce que** les tôles planes individuelles (S1, ..., S4) ne s'étendent que sur une des parties (13, 14) et sont pourvues de revêtements catalytiques (11, 12; 15, 16) de telle façon que les tôles planes voisines dans la pile soient toujours disposées en quinconce par rapport aux parties (13, 14).

14. Catalyseur selon la revendication 13, **caractérisé en ce que** le revêtement catalytique (11, 12) est réalisé sous la forme de bandes parallèles d'égale largeur s'étendant dans la direction de l'écoulement (FD), qui sont disposées en alternance sur la largeur des tôles sur la face supérieure et la face inférieure des tôles, de telle façon que la tôle soit toujours revêtue uniquement sur une face.

15. Catalyseur selon la revendication 14, **caractérisé en ce qu'**une bande des revêtements catalytiques (11, 12) est chaque fois associée à chacun des canaux (C1, ..., C4).

16. Catalyseur selon la revendication 13, **caractérisé en ce que** le revêtement catalytique (15, 16) est réalisé sous la forme de rangées parallèles de zones individuelles en forme d'îlots de mêmes dimensions, s'étendant dans la direction de l'écoulement (FD), rangées qui sont disposées en alternance sur la largeur (w) des tôles sur la face supérieure et la face inférieure des tôles, de telle façon que la tôle soit toujours revêtue uniquement sur une face.

17. Catalyseur selon la revendication 16, **caractérisé en ce qu'**une rangée des revêtements catalytiques en forme d'îlots (15, 16) est chaque fois associée à chacun des canaux (C1, ..., C4).

18. Catalyseur selon l'une quelconque des revendications 1 à 6, **caractérisé en ce que** les tôles planes (S1, ..., S4) et éventuellement les tôles ondulées (CS1, ..., CS4) sont pourvues sur la longueur totale (L_{g}) d'un revêtement catalytique (15, 16) sous la forme de rangées parallèles de zones en forme d'îlots d'égales dimensions, s'étendant dans la direction de l'écoulement (FD), dans lequel les zones en forme d'îlots sont disposées à l'intérieur des rangées et en alternance transversalement aux rangées sur la face supérieure et la face inférieure de la tôle, de telle façon que la tôle soit toujours revêtue uniquement sur une face.

19. Catalyseur selon la revendication 18, **caractérisé en ce qu'**au moins une rangée des revêtements' catalytiques en forme d'îlots (15, 16) est chaque fois associée à chacun des canaux (C1, ..., C4).

20. Catalyseur selon l'une quelconque des revendications 1 à 19, **caractérisé en ce que** le catalyseur est utilisé pour des réactions exothermiques, dans lesquelles il faut éviter une réaction homogène conjointe en phase gazeuse.

21. Catalyseur selon la revendication 20, **caractérisé en ce que** le catalyseur est utilisé pour le montage dans des turbines à gaz.
